# FASCICULE DE BREVET EUROPEEN

(11) **EP 3 164 595 B1**
(45) Date de publication et mention de la délivrance du brevet: **22.08.2018**
(21) Numéro de dépôt: 15745528.8
(22) Date de dépôt: 30.06.2015
(51) Int. Cl.: F03B 13/14, F03B 13/18

(54) **INSTALLATION POUR LA RECUPERATION DE L'ENERGIE D'UNE HOULE ET/OU POUR L'ATTENUATION ACTIVE DE LADITE HOULE**
ANLAGE ZUR RÜCKGEWINNUNG VON ENERGIE AUS WELLENGANG UND/ODER ZUR AKTIVEN DÄMPFUNG DES WELLENGANGS
INSTALLATION FOR THE RECOVERY OF ENERGY FROM SEA SWELL AND/OR THE ACTIVE ATTENUATION OF SAID SWELL

(30) Priorité: 30.06.2014 FR 1456225
(43) Date de publication de la demande: 10.05.2017
(73) Titulaire: Carme, Christian, 13010 Marseille (FR)
(72) Inventeur: Carme, Christian, 13010 Marseille (FR)
(74) Mandataire: Roman, Alexis
(86) Numéro de dépôt international: PCT/FR2015/051794
(87) Numéro de publication internationale: WO 2016/001574

(56) Documents cités:
- WO-A1-97/37123
- WO-A1-2005/111411
- WO-A1-2014/026219
- FR-A1- 2 970 524
- US-A1- 2010 308 589

## Description

### Domaine technique de l'invention.

L'invention a pour objet une installation pour la récupération de l'énergie d'une houle et/ou pour l'atténuation active de ladite houle.

Elle concerne le domaine technique des installations hydrauliques pour l'utilisation de l'énergie des vagues ou des marées.

### État de la technique.

La création de la houle se fait à partir du vent et/ou d'un courant qui commence à rider l'eau en surface. La propagation de cette excitation de l'eau en surface fait que le fluide s'organise de proche en proche pour donner un régime ondulatoire propagatif.

Il existe de nombreux systèmes de récupération de l'énergie houlomotrice permettant de récupérer l'énergie des vagues.

On connait par exemple la technologie CETO (par exemple : http://www.carnegiewave.com) où des bouées sous-marines en mouvement (colonnes d'eau oscillantes immergées) à 10 mètres sous l'eau, montent, descendent et tanguent au gré des vagues. Ancrées sur le fond, leur mouvement actionne un piston, aspire de l'eau de mer dans une turbine ou comprime de l'air ou de l'huile, qui va faire tourner un moteur. Le rendement de cette technologie est toutefois très faible proportionnellement aux surfaces nécessaires.

On connait également des installations (par exemple : http://owcwaveenergy.weebly.com/our-demonstrations.html) dans lesquelles, en fin de course, les vagues entrent dans un caisson où elles compriment de l'air emprisonné. Cet air comprimé peut alors faire tourner une turbine. En pratique, le rendement de ce type d'installation est toutefois très limité.

On connait encore des systèmes des caissons flottants reliés entre eux par des charnières articulées. Les vagues déplacent les caissons dans tous les sens. L'énergie est récupérée au niveau des articulations mobiles, grâce à des pistons actionnant des pompes. En plus d'être encombrant, ce type d'installation empêche toute navigation dans la zone où sont installés les caissons flottants.

On connait en outre, des systèmes de récupération de l'énergie des courants se composant d'une série de panneaux métalliques rectangulaires articulés par une charnière agencée sur un socle fixé sur le fond marin. La force naturelle de la houle provoque l'oscillation constante des panneaux et c'est un système de pistons hydrauliques intégré dans la charnière qui collecte l'énergie cinétique ainsi générée. Le rendement reste limité.

Tous ces systèmes ne sont pas réversibles : ils permettent de récupérer l'énergie de la houle, mais ne peuvent pas atténuer cette dernière.

On connait plus particulièrement par le brevet FR 2.906.274 (ACRI IN), une installation pour l'amortissement et/ou la récupération de l'énergie de la houle. Elle comprend un caisson positionné à une profondeur donnée dans un milieu marin. Ce caisson présente une cuve cylindrique dans laquelle se déplace un plateau oscillant. Ce dernier oscille selon un axe vertical en fonction des fluctuations de la hauteur de la colonne d'eau créée par un clapotis résultant d'une houle incidente et d'une houle réfléchie par un ouvrage. La cuve et le plateau délimitent une chambre dont l'étanchéité est assurée par un joint déformable en forme de soufflet.

Ce caisson présente de nombreux inconvénients. Tout d'abord, le joint est susceptible de se dégrader rapidement, non seulement du fait des sollicitations répétées qu'il subit, mais également par l'agressivité du milieu marin dans lequel le caisson est immergé. Or, si la chambre ne reste pas étanche, la reprise du mouvement de la houle devient impossible car le mouvement du plateau est mis hors-circuit. En outre, la fixation du joint sur le plateau oscillant et sur la cuve est particulièrement complexe à réaliser. Egalement, le joint à soufflet limite le débattement du plateau oscillant. Ce caisson ne peut donc être utilisé que pour une houle de faible amplitude. Enfin, de par son fonctionnement, il apparait que l'amortissement de la houle ne peut être que limité.

Le document brevet WO2005/111411 (SEAPOWER) divulgue un appareil similaire permettant de récupérer l'énergie des vagues. Cet appareil comprend une cuve surmontée d'un diaphragme conçu pour fléchir en réponse à l'action des vagues. Ce diaphragme présente une partie rigide entourée d'une partie externe dont les bords sont reliés de façon étanche à l'extrémité supérieure de la cuve. L'espace délimité par la cuve et la partie rigide est donc rendue étanche par la partie externe (29). Cette dernière implique des mesures de jointement complexes avec la cuve et limite le débattement de la partie rigide.

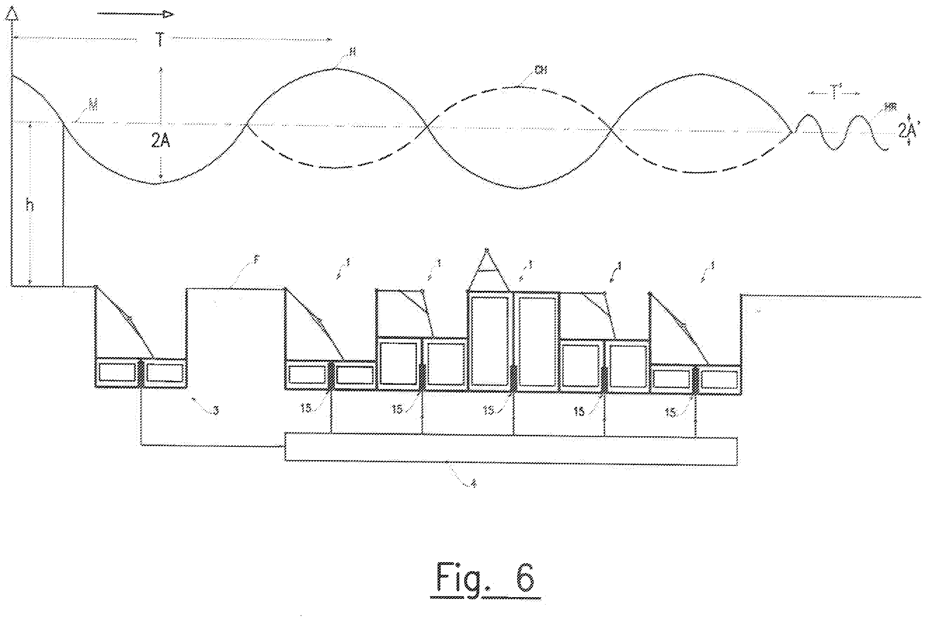

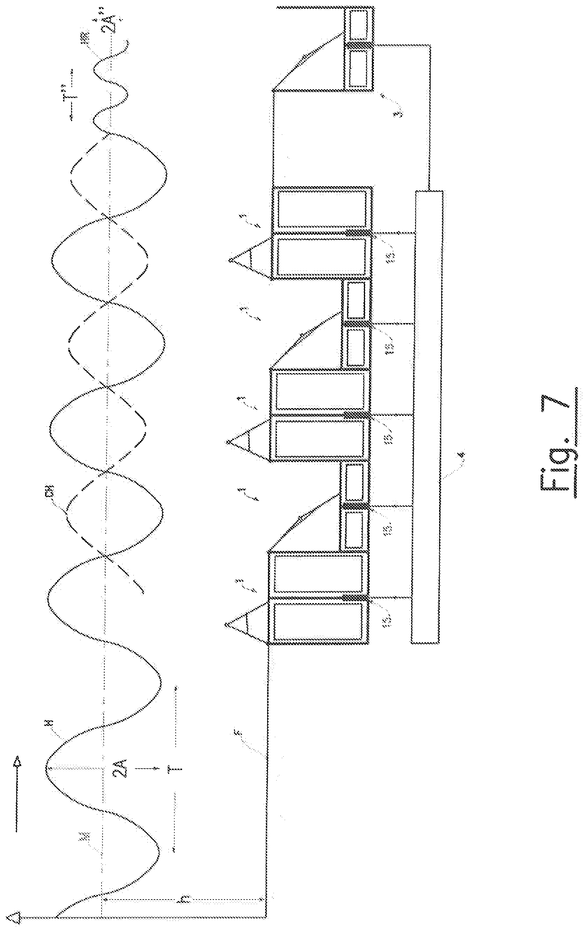

Le document brevet FR2970524 (MANSOT) concerne un dispositif immergé de collection et de conversion de l'énergie de la houle et des marées. Dans les modes de réalisation des figures 6 et 7, le dispositif est formé par une chambre dans laquelle se déplace un piston. Des soufflets assurent l'étanchéité L'espace délimité par la chambre et le piston est rendu étanche par des soufflets. Ces soufflets induisent les mêmes problèmes techniques que ceux mentionnés précédemment.

Le document brevet US2010/308589 (ROHRER) concerne un dispositif immergé permettant de convertir l'énergie de la houle. Dans le mode de réalisation de la figure 10, le dispositif est formé par une cuve dans laquelle se déplace un piston. L'espace délimité par la cuve et le piston est rendue étanche par des soufflets qui induisent les mêmes problèmes techniques que ceux mentionnés précédemment.

Le document brevet WO97/37123 (BERG) concerne une centrale électrique hydropneumatique servant à convertir l'énergie des vagues. La centrale est formée par une cuve dans laquelle se déplace un piston. La cuve et le piston (2) délimitent une chambre. Des soufflets disposés à la périphérie du piston assurent l'étanchéité. Ces soufflets induisent les mêmes problèmes techniques que ceux mentionnés précédemment.

L'invention vise à remédier à cet état des choses. En particulier, un objectif de l'invention est d'améliorer la conception du caisson à plateau oscillant du type décrit dans le brevet FR 2.906.274 précité, de manière à le rendre plus fiable et plus efficace.

Un autre objectif de l'invention est d'améliorer l'étanchéité de la chambre délimitée par la cuve et le plateau oscillant.

Encore un autre objectif de l'invention est de proposer un caisson dont la conception permet d'atténuer davantage la houle.

### Divulgation de l'invention.

La solution proposée par l'invention est une installation comprenant au moins un caisson positionné à une profondeur donnée dans un milieu marin, ledit caisson présentant une cuve rigide dans laquelle se déplace un plateau oscillant, lequel plateau oscillant est adapté pour osciller selon un axe vertical en fonction des fluctuations de la hauteur de la colonne d'eau créée par la houle au droit dudit plateau, ladite cuve et ledit plateau délimitant une chambre.

Cette installation est remarquable en ce que la chambre est rendue étanche par une poche souple étanche remplie d'un gaz et qui se déforme en fonction des oscillations du plateau oscillant, la pression du gaz dans ladite poche étant réglée pour compenser tout ou partie du poids de la colonne d'eau située au droit dudit plateau en l'absence de houle.

L'utilisation de cette poche souple permet de s'affranchir de tout dispositif de jointement complexe entre le plateau oscillant et la cuve, ce qui réduit les risques d'avarie et améliore la fiabilité et l'efficacité du caisson. De plus, une telle poche étanche ne limite plus le débattement du plateau, le caisson pouvant être utilisé pour des houles ayant des amplitudes conséquentes de plusieurs mètres.

D'autres caractéristiques avantageuses de l'invention sont listées ci-dessous. Chacune de ces caractéristiques peut être considérée seule ou en combinaison avec les caractéristiques remarquables définies ci-dessus, et faire l'objet, le cas échéant, de demandes de brevets divisionnaires :
- La poche a préférentiellement la même longueur et largeur - ou diamètre-interne que la cuve.
- La poche peut comprendre plusieurs compartiments.
- Le plateau oscillant peut être combiné à un bras articulé le guidant dans son mouvement oscillant.
- Ce bras articulé peut intégrer un mécanisme à ressort adapté pour compenser une partie du poids de la colonne d'eau située au droit du plateau oscillant en l'absence de houle.
- Le plateau oscillant est préférentiellement associé à un moyen de récupération d'énergie adapté pour récupérer l'énergie mécanique du plateau oscillant.
- Le moyen de récupération d'énergie est avantageusement installé au centre de la cuve, la poche souple étanche étant conformée autour dudit moyen de récupération.
- Le caisson peut être enterré dans le fond marin de sorte que l'extrémité supérieure de la cuve soit au même niveau que ledit fond.
- Dans une variante de réalisation, le caisson est posé sur le fond marin, les parois extérieures de la cuve présentant un plan incliné.
- Le plateau oscillant peut également être associé à un moyen actionneur adapté pour contrôler les mouvements dudit plateau de sorte que ce dernier agisse en opposition de phase avec le déplacement de la colonne d'eau qui est induit par la houle et engendre une atténuation active de ladite houle.
- Plusieurs caissons adjacents sont préférentiellement disposés en ligne dans le sens de déplacement de la houle, le plateau oscillant de chacun de ces caissons étant associé à un moyen actionneur, ces moyens actionneurs étant synchronisés de sorte que le mouvement des plateaux oscillants engendre une contre-houle artificielle qui agit en opposition de phase avec la houle pour l'atténuer activement.
- Selon premier un mode de réalisation : - un moyen capteur est disposé en amont des caissons selon le sens de déplacement de la houle, lequel moyen capteur est adapté pour capter la période et l'amplitude de la houle avant atténuation ; - un moyen de filtrage par anticipation/retard reçoit en entrée les signaux délivrés par le moyen capteur et délivre en sortie des signaux pour commander les moyens actionneurs.
- Selon un deuxième mode de réalisation : - un moyen capteur est disposé en aval des caissons selon le sens de déplacement de la houle, lequel moyen capteur est adapté pour capter la période et l'amplitude de la houle résultante après atténuation ; - un moyen de filtrage par rétroaction (aussi appelé Feedback) reçoit en entrée les signaux délivrés par le moyen capteur et délivre en sortie des signaux pour commander les moyens actionneurs.
- Selon un troisième mode de réalisation : - un premier moyen capteur est disposé en amont des caissons selon le sens de déplacement de la houle, lequel moyen capteur est adapté pour capter la période de référence et l'amplitude de référence de la houle avant atténuation ; - un second moyen capteur est disposé en aval des caissons selon le sens de déplacement de la houle, lequel moyen capteur est adapté pour capter la période d'erreur et l'amplitude d'erreur de la houle résultante après atténuation ; un moyen de filtrage Feedforward comprend une entrée reliée au premier moyen capteur et une autre entrée reliée au second moyen capteur ; un circuit de mixage reçoit en entrée les signaux délivrés par le moyen de filtrage Feedforward, et délivre en sortie des signaux pour commander les moyens actionneurs.
- Selon un quatrième mode de réalisation : - un premier moyen capteur est disposé en amont des caissons selon le sens de déplacement de la houle, lequel moyen capteur est adapté pour capter la période de référence et l'amplitude de référence de la houle avant atténuation ; - un second moyen capteur est disposé en aval des caissons selon le sens de déplacement de la houle, lequel moyen capteur est adapté pour capter la période d'erreur et l'amplitude d'erreur de la houle résultante après atténuation ; un moyen de filtrage Feedforward comprend une entrée reliée au premier moyen capteur et une autre entrée reliée au second moyen capteur ; un moyen de filtrage par rétroaction Feedback comprend une entrée reliée au second moyen capteur ; un circuit de mixage reçoit en entrée les signaux délivrés par le moyen de filtrage Feedforward et par le moyen de filtrage par rétroaction Feedback, et délivre en sortie des signaux pour commander les moyens actionneurs.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 est une vue schématique en coupe verticale d'un caisson conforme à l'invention,
- la figure 2 schématise un caisson enterré dans le fond marin,
- la figure 3 schématise un caisson posé sur le fond marin,
- les figures 4a à 4d illustrent les mouvements successifs du plateau oscillant lors du passage d'une onde de la houle,
- la figure 5 schématise une première configuration d'installation pour une atténuation active de la houle selon un contrôle de type anticipation/retard, la période de cette houle étant courte,
- la figure 6 illustre la réponse active de l'installation de la figure 5 pour une houle dont la période est longue,
- la figure 7 schématise une deuxième configuration d'installation pour une atténuation active de la houle selon un contrôle de type Feedback,
- la figure 8 schématise une troisième configuration d'installation pour une atténuation active de la houle selon un contrôle de type Feedforward,
- la figure 9 schématise une quatrième configuration d'installation pour une atténuation active de la houle selon un contrôle de type Feedforback.

### Modes préférés de réalisation de l'invention.

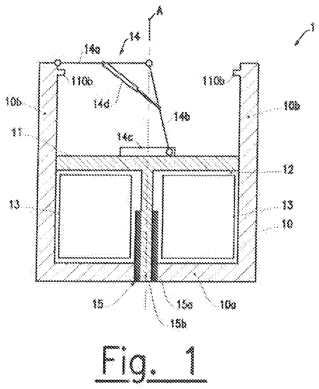

En se rapportant à la figure 1, le caisson 1 conforme à l'invention comprend une cuve rigide 10 dans laquelle se déplace un plateau oscillant 11.

La cuve 10 présente une paroi de fond 10a et des parois latérales 10b. Elle est de forme générale cylindrique ou parallélépipédique. Dans le cas d'une cuve cylindrique, son diamètre interne est par exemple compris entre 2 m et 20 m et sa hauteur par exemple comprise entre 3 m et 10 m. Dans le cas d'une cuve parallélépipédique, ses dimensions internes peuvent par exemple être les suivantes : sa longueur peut varier de 2 m à 100 m, sa largeur de 2 m à 10 m et sa hauteur de 3 m à 10 m. L'épaisseur de la cuve 1 dépend du matériau choisi,

La cuve 1 est réalisée dans un matériau résistant au milieu marin, tel qu'un métal ou un bois revêtu d'une couche de protection du type peinture, un plastique, un matériau composite, etc.

Pour limiter la course du plateau 11 et éviter que ce dernier ne sorte de la cuve 10, des butées 110b peuvent être placées sur la surface interne des parois latérales 10b. Sur la figure 1, ces butées 110b sont placées à l'extrémité supérieure des parois latérales 10b pour limiter la montée du plateau 11. On peut également installer des butées basses permettant de limiter la descente du plateau 11 dans la cuve 10. Ces butées basses sont par exemple installées à environ 1 m du fond de la cuve 10.

Le plateau oscillant 11 est ajusté à la forme interne de la cuve 1 de manière à pouvoir se déplacer selon l'axe vertical A. Il est réalisé dans le même matériau que la cuve 10.

Au moins un piston 15 est associé au plateau 11. Ce piston 15 est agencé dans la cuve 10 de manière à s'allonger lorsque le plateau 11 monte et se replier lorsque ledit plateau descend. Sur la figure 1, le piston 15 se présente sous la forme d'un vérin à tiges télescopiques d'axe vertical A, dont une partie 15b est fixe par rapport à la cuve 11 et une autre partie 15b solidaire du plateau 11.

Ce piston 15 peut fonctionner comme récupérateur d'énergie de manière à transformer l'énergie mécanique du plateau 11 en énergie électrique. Cette conversion peut par exemple être réalisée par le déplacement relatif d'un aimant et d'un solénoïde intégrés dans le piston 15. Ce dernier peut également fonctionner comme un actionneur adapté pour contrôler les mouvements du plateau 11, comme cela est expliqué plus après dans la description.

Selon une caractéristique avantageuse de l'invention, le plateau 11 est associé à un bras articulé 14 adapté pour le guider dans son mouvement oscillant selon l'axe vertical A. Ce bras articulé 14 évite d'avoir recours à des moyens de guidage complexes, de type palier par exemple, entre les bords du plateau 11 et la surface interne des parois latérales 10b.

Sur la figure 1, le bras articulé 14 comprend : - une première bielle 14a dont une extrémité est montée pivotante au niveau de l'extrémité supérieure d'une des parois latérales 11b ; - une seconde bielle 14b dont une extrémité est montée pivotante à l'autre extrémité de la première bielle 14a. L'autre extrémité de la seconde bielle 14b est montée pivotante et glissante dans une glissière 14c solidaire du plateau 11.

Un organe 14d de type piston ou vérin à tiges télescopiques, relie les deux bielles 14a et 14b. Cet organe 14d est placé de manière à s'allonger lorsque le plateau 11 descend et à se replier lorsque ledit plateau remonte.

L'organe 14d peut être moteur, c'est-à-dire qu'il actionne et met en mouvement les bielles 14a et 14b pour faire osciller le plateau 11. Il peut encore fonctionner comme récupérateur d'énergie, transformant l'énergie mécanique du bras 14 en une énergie électrique, au moyen du déplacement relatif d'un aimant et d'un solénoïde intégrés dans l'organe 14d.

La cuve 10 et le plateau 11 délimite une chambre 12 dont le volume varie en fonction de la position du plateau 11. La chambre 12 est de fait délimitée par : la paroi de fond 10a de la cuve 10, le plateau 11 et les parois latérales 10b de ladite cuve. Elle est rendue étanche par une poche souple - ou vessie - étanche 13 remplie d'un gaz et qui se déforme en fonction des oscillations du plateau 11. En pratique, il apparait que cette étanchéité est plus robuste que celle décrite dans le brevet FR 2.906.274 précité.

Cette poche souple 13 est par exemple réalisée en caoutchouc ou en un autre polymère élastique, éventuellement renforcé de fibres, et dont l'épaisseur est par exemple comprise entre 10 mm et 100 mm. La poche 13 a la même longueur et largeur (ou diamètre) interne que la cuve 10. Elle peut comprendre un ou plusieurs compartiments de sorte que si un des compartiments venait à être percé, les autres puissent continuer à assurer leur fonction.

Le gaz utilisé est typiquement de l'air, mais tout autre gaz compressible peut être employé, tel que l'oxygène par exemple, A cet effet, la poche 13 est pourvue d'une ou plusieurs valves permettant son gonflage et/ou sa purge en fonction de la pression interne réglée.

La poche 13 est installée simplement à l'intérieur de la cuve 10. Pour assurer son maintien en position, sa partie supérieure peut toutefois être solidarisée au plateau 11 et sa partie inférieure à la paroi de fond 10a. Cette solidarisation se fait par tout moyen d'attache approprié convenant à l'homme du métier.

Lorsque le piston 15 est installé au centre de la cuve 10, la poche souple 13 est conformée autour dudit piston. La poche souple 13 peut par exemple se présenter sous la forme d'une sorte de tore, le piston 15 étant installé au centre dudit tore.

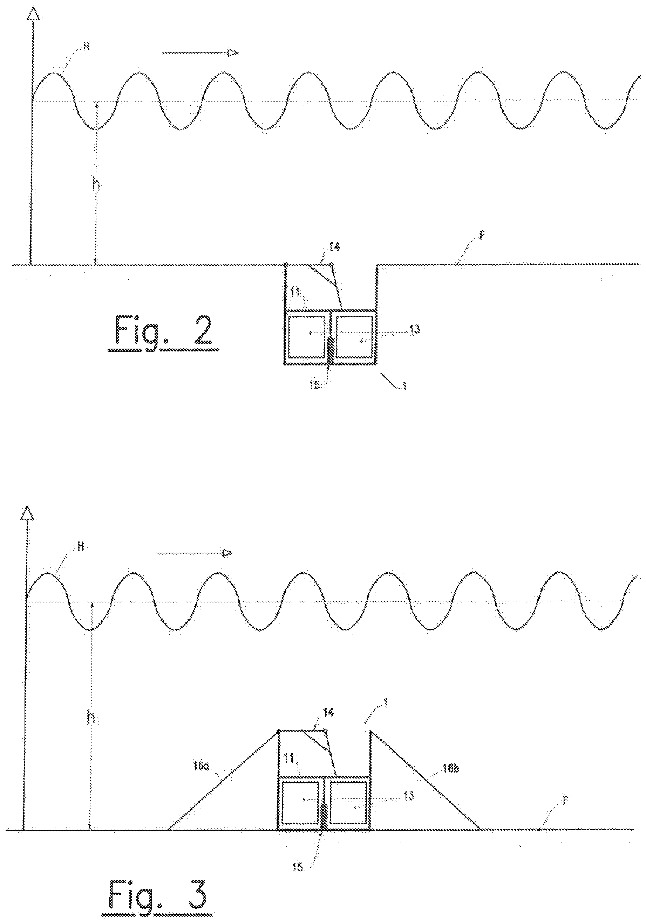

Le caisson 1 est positionné à une profondeur donnée dans un milieu marin, par exemple à une profondeur comprise entre 2 m et 30 m. De par sa conception, le caisson 1 peut être disposé dans une eau peu profonde, par exemple à une profondeur h (figure 2) inférieure à 15 m.

La propagation de la houle en surface ne dépend généralement pas du fond de la mer, sauf quand ce fond devient de moins en moins profond et quand la hauteur de la houle devient, en proportion, significative vis-à-vis de la hauteur de la colonne d'eau liée à cette profondeur. C'est la raison pour laquelle, à partir d'une certaine profondeur, l'effet du fond marin sur l'amplitude de la houle devient de plus en plus significatif à mesure que l'on se rapproche de la côte (plages, rochers, ...). Si le fond présente une bosse, cette dernière va amplifier la houle. Au contraire, si le fond présente un creux, ce dernier va atténuer la houle. Il peut donc apparaître avantageux qu'une cuve 10 installée dans le fond marin ne perturbe qu'à minima la houle.

Sur la figure 2, le caisson 1 est enterré dans le fond marin F de sorte que l'extrémité supérieure de la cuve 10 soit au même niveau que ledit fond. Cette configuration est celle qui perturbe le moins le milieu marin et la houle. Sa mise en oeuvre peut toutefois être lourde car elle nécessite de creuser le fond marin pour installer le caisson 1.

Sur la figure 3, le caisson 1 est posé sur le fond marin F, les parois latérales extérieures de la cuve 10 présentant un plan incliné 16a, 16b. Ces plans inclinés 16a, 16b sont orientés dans le sens de déplacement de la houle. Ils ont un point haut disposé au niveau de l'extrémité supérieure de la cuve 10 et un point bas éloigné de ladite cuve et disposé au niveau du fond F. Ces plans inclinés 16a, 16b permettent d'éviter, ou à tout le moins de limiter, les discontinuités amplificatrices sur la houle par effet de fond. Si le premier plan incliné 16a que rencontre la houle a tendance à l'amplifier, le second plan incliné 16b la supprime, en remettant la colonne d'eau à son niveau initial.

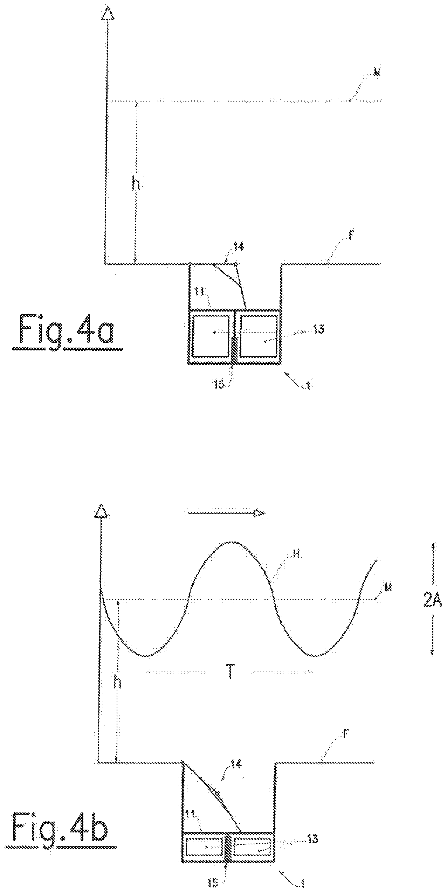

Les figures 4a à 4c illustrent le comportement du caisson 1 en mode récupération d'énergie de la houle. Le caisson 1 est enterré dans le fond marin F dans une configuration similaire à celle de la figure 2.

Sur la figure 4a, la ligne M schématise le niveau de la mer au repos, en l'absence de houle. Le poids de la colonne d'eau située au droit du plateau oscillant 11 tend à faire descendre ce dernier vers le fond de la cuve 10. Il s'agit d'une pression statique que subit le plateau 11. Conformément à l'invention, on gonfle la poche souple 13 de manière à ce que la pression du gaz dans ladite poche compense cette pression statique. De cette manière, le plateau 11 est en équilibre équipotentielle avec la pression statique et ne subit que la pression dynamique liée aux fluctuations de la colonne d'eau induites par la houle. En pratique, la pression du gaz dans la poche 13 est réglée de sorte que la position d'équilibre du plateau 11 soit située sensiblement au milieu de la cuve 10.

Une partie de la pression statique liée au poids de la colonne d'eau située au droit du plateau 11, peut également être reprisr par le bras articulé 14. Pour ce faire, ce dernier peut intègrer un mécanisme à ressort adapté pour compenser une partie de cette pression statique, lequel ressort est par exemple installé dans l'organe 14d.

Sur la figure 4b, on a représenté une boule H de longueur d'onde (ou période) T, et d'amplitude 2A. Lorsqu'une crête de la houle H passe au-dessus du caisson 1, la hauteur de la colonne d'eau a augmenté de A. Le plateau 11 subit une force équivalente qui le pousse vers le fond de la cuve 10, comprimant la poche 13. Le plateau 11 descend d'une distance A par rapport à la configuration de la figure 4a.

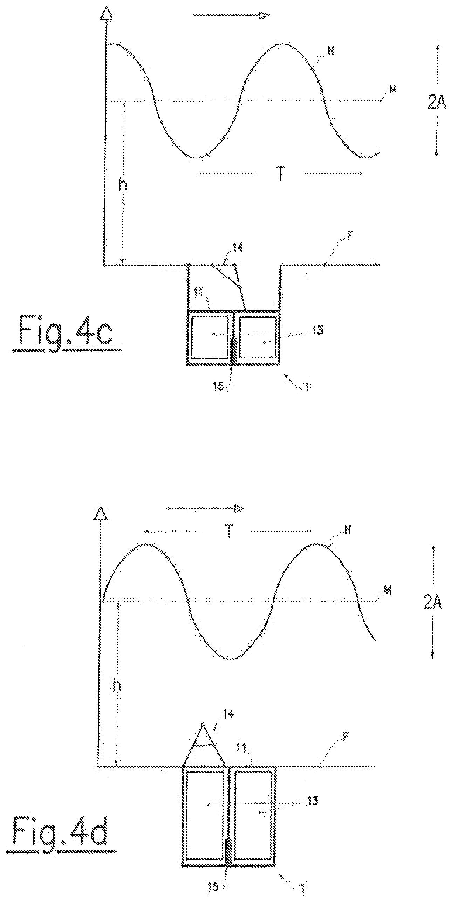

Sur la figure 4c, la crête de la houle H passe le caisson 1, la hauteur de la colonne d'eau retrouve son niveau neutre de la figure 4a. Le plateau 11 et la poche 13 retrouvent leur position d'équilibre, Le plateau 11 remonte d'une distance A par rapport à la configuration de la figure 4b.

Lorsqu'un creux de la houle H passe au-dessus du caisson 1 (figure 4d), la hauteur de la colonne d'eau a diminué de A. Le plateau 11 subit la plus faible pression. Il remonte vers le haut de la cuve 10, et la poche 13 se détend. Le plateau 11 remonte d'une distance A par rapport à la configuration de la figure 4c.

Le plateau 11 oscillant naturellement selon l'axe A en fonction des fluctuations de la hauteur de la colonne d'eau créée par la houle au droit dudit plateau, il est aisé de récupérer cette énergie au niveau du piston 15 et/ou de l'organe 14d.

Le débattement du plateau 11, et donc la hauteur de la cuve 10, est calculé pour une houle forte qui est statistiquement donnée à 4 m, soit 2A=4 m. Pour une houle supérieure à 4 m, les positions basse et haute du plateau 11 seront définies par les butées précitées, évitant de fait tout risque d'endommagement et/ou de destruction du caisson 1.

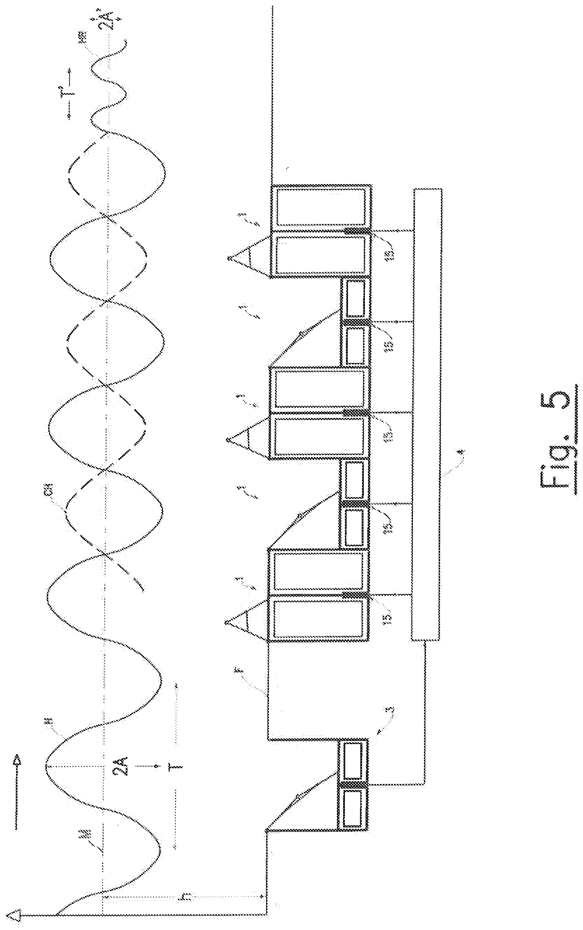

Le caisson 1 est réversible, c'est-à-dire qu'il peut également être utilisé pour atténuer la houle, et non plus pour capter son énergie. Dans ce cas, comme cela est expliqué plus après en référence aux figures 5 à 8, le plateau 11 ne subit plus les fluctuations de la hauteur de la colonne d'eau créée par la houle, et le piston 15 - et/ou le bras articulé 14- devient un actionneur. Ce dernier contrôle les mouvements du plateau 11 de sorte qu'il agisse en opposition de phase avec le déplacement de la colonne d'eau qui est induit par la houle et engendre une atténuation active de ladite houle.

Le principe consiste à générer une contre-houle artificielle mise en opposition de phase avec la houle primaire de façon à en annuler ou réduire ses effets. A titre d'exemple, il est ainsi possible de « casser » de grosses vagues pendant une tempête pour protéger des digues et/ou des côtes et de s'adapter en temps réel à tout type de houle (ce que ne permet pas un système statique réglé pour une longueur d'onde donnée).

Sur les figures 5 à 9, plusieurs caissons 1 sont positionnés côte à côte au niveau du fond marin F. Ces caissons 1 adjacents sont disposés en ligne dans le sens de déplacement de la houle H, ce sens étant schématisé par la flèche. Cette ligne correspond à la ligne de crête normale de la houle H se propageant vers la côte à protéger.

Les caissons 1 sont identiques à celui décrit en référence à la figure 1, leur plateau oscillant 11 étant associé à un piston 15. Ils forment des enceintes hydrauliques étanches similaires à des enceintes acoustiques, et qui sont capables de déplacer des colonnes d'eau. Ces actionneurs 15 sont synchronisés pour générer en temps réel une contre-houle CH artificielle qui atténue activement la houle H.

La synchronisation des actionneurs 15 est réalisée grâce à un contrôle de la houle H en temps réel, lequel contrôle se fait en utilisant quatre types de lois au choix : anticipation/retard, Feedforward, Feedback, et Feedforback. Ces techniques de filtration sont habituellement utilisées en acoustique pour la réduction du bruit et sont par exemple décrites dans le brevet EP 0.852.793 (TECHNOFIRST), ou dans les publications Ch. CARME, "*The third principle of active control: the FEED FORBACK®",* Active 99 ; MIYASAKI et al, " Considération about feedback and feedforward control for active control of micro-vibration", 2nd international conference on vibration control, Yokohama 1994, et toutes les références bibliographiques y afférentes. L'homme du métier pourra se reporter à ces brevets et ouvrages. L'invention vise ainsi à transposer de manière non évidente ces techniques de filtration à des macro-vibrations (houle) alors qu'elles sont habituellement utilisées pour des micro-vibrations.

La figure 5 illustre un contrôle de type anticipation/retard. Le principe consiste à analyser la houle avant atténuation pour adapter, en temps réel ou pas, le mouvement des plateaux 11 de manière à optimiser davantage l'atténuation.

Un moyen capteur 3 est disposé en amont des caissons 1 selon le sens de déplacement de la houle H. Ce moyen capteur 3 est adapté pour capter la période T et l'amplitude 2A de la houle avant atténuation. Ce moyen capteur 3 est préférentiellement un caisson conforme à l'invention dont le plateau oscillant oscille en subissant les fluctuations de la hauteur de la colonne d'eau créée par la houle H au droit dudit plateau.

Tous les actionneurs 15 sont connectés à un moyen de filtrage 4 par anticipation. Ce dernier se présente par exemple sous la forme d'un ou plusieurs circuits imprimés intégrant éventuellement un processeur et une mémoire dans laquelle sont enregistrés des programmes dont les instructions, lorsqu'elles sont exécutées par ledit processeur, permettent de commander directement ou indirectement les actionneurs 15, et plus particulièrement une montée et/ou une descente forcée des plateaux 11.

Le moyen de filtrage 4 reçoit en entrée les signaux délivrés par le moyen capteur 3 et délivre en sortie des signaux pour commander les actionneurs 15. Les signaux de sortie sont générés en appliquant aux signaux d'entrée un algorithme de filtrage de type anticipation/retard classiquement utilisé dans le domaine technique de l'acoustique.

Le mouvement des plateaux 11 est ainsi forcé de manière à ce qu'ils génèrent une contre-houle CH artificielle qui agit en opposition de phase avec la houle H pour l'atténuer activement. La houle résultante HR a une période T'<T et une amplitude 2A'<2A.

Les meilleurs résultats sont obtenus quand la série de caissons 1 a une longueur au moins égale à deux fois la période T de la houle H à atténuer. Il est ainsi possible de créer une contre-houle HC sur deux périodes T. Toutefois, pour une houle H dont la période est plus longue (figure 6), et où la série de caissons ne peut générer qu'une contre-houle CH que sur une seule période, de bons résultats sont toutefois obtenus, l'amplitude 2A' de la houle résultante HR étant significativement réduite par rapport à l'amplitude 2A la houle H. Bien évidemment il est possible de rajouter une ou plusieurs autres séries de caissons en aval de cette première série, de façon à améliorer davantage l'atténuation.

La figure 7 illustre un contrôle de type Feedback. Le principe consiste cette fois à analyser la houle après atténuation pour adapter, en temps réel ou pas, le mouvement des plateaux 11 de manière à optimiser davantage l'atténuation.

Un moyen capteur 3 est ici disposé en aval des caissons 1 selon le sens de déplacement de la houle H. Ce moyen capteur 3 est adapté pour capter la période T' et l'amplitude 2A' de la houle HR après atténuation. Ce moyen capteur 3 est préférentiellement un caisson conforme à l'invention dont le plateau oscillant oscille en subissant les fluctuations de la hauteur de la colonne d'eau créée par la houle H au droit dudit plateau.

Le moyen de filtrage Feedback 4 est du type à rétroaction et se présente sous la même forme que celle décrite précédemment. Il reçoit en entrée les signaux délivrés par le moyen capteur 3 et délivre en sortie les signaux pour commander les actionneurs 15. Les signaux de sortie sont générés en appliquant aux signaux d'entrée un algorithme de filtrage par rétroaction Feedback classiquement utilisé dans le domaine technique de l'acoustique.

Les plateaux 11 génèrent ainsi une contre-houle CH artificielle qui agit en opposition de phase avec la houle H pour l'atténuer activement. La houle résultante HR a une période T"<T et une amplitude 2A"<2A.

Un filtrage Feedback permet d'obtenir une meilleur atténuation de la houle qu'avec un filtrage par anticipation/retard : T"<T' et 2A"<2A'. Toutefois, pour certaines périodes de houle, il existe un risque de générer des phénomènes de réjection qui ont tendance à augmenter au moins l'amplitude de la houle. Le filtrage Feedforward est sur ce point plus stable.

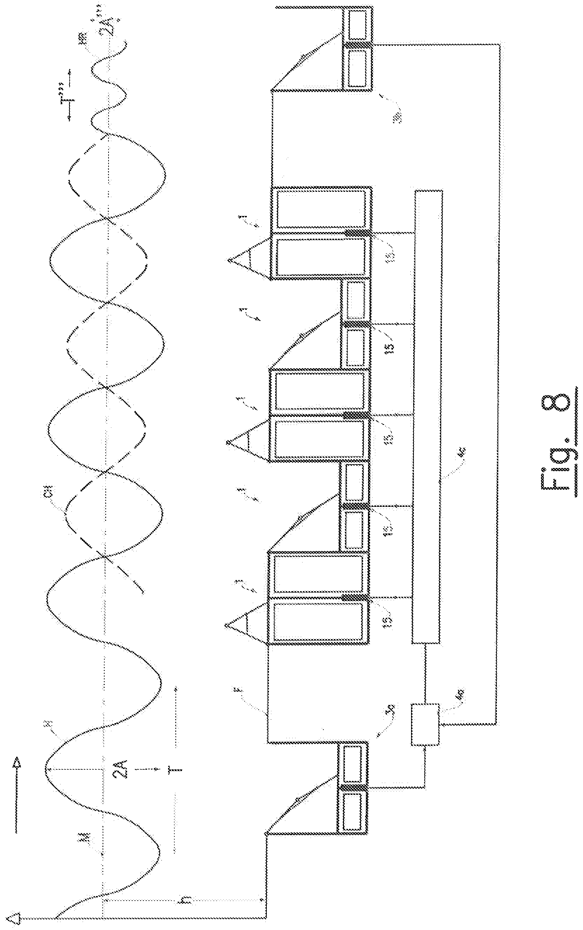

La figure 8 illustre un contrôle de type Feedforward. Le principe consiste à minimiser l'amplitude de la houle captée par un moyen capteur disposé en aval des caissons 1.

Un premier moyen capteur 3a est disposé en amont des caissons 1 selon le sens de déplacement de la houle H. Ce premier moyen capteur 3a est adapté pour capter la période T et l'amplitude 2A de la houle H avant atténuation.

Un second moyen capteur 3b est disposé en aval des caissons 1 selon le sens de déplacement de la houle H. Ce second moyen capteur 3b est adapté pour capter la période d'erreur T" et l'amplitude d'erreur 2A'" de la houle résultante HR après atténuation.

Un moyen de filtrage Feedforward 4a comprend une entrée reliée au premier moyen capteur 3a et une autre entrée reliée au second moyen capteur 3b.

Un circuit de mixage 4c reçoit en entrée les signaux délivrés par le moyen de filtrage Feedforward 4a, et délivre en sortie des signaux pour commander les moyens actionneurs 15.

En pratique, le premier moyen capteur 3a permet de délivrer un signal au moyen de filtrage Feedforward 4a qui délivrera un signal d'entrée au moyen de mixage 4c. Dans le même temps une adaptation en temps réels du moyen de filtrage 4a peut être envisagée en vue de prendre en compte d'éventuelles variations de l'amplitude 2A'" et/ou de la période T'" de la houle résultante HR.

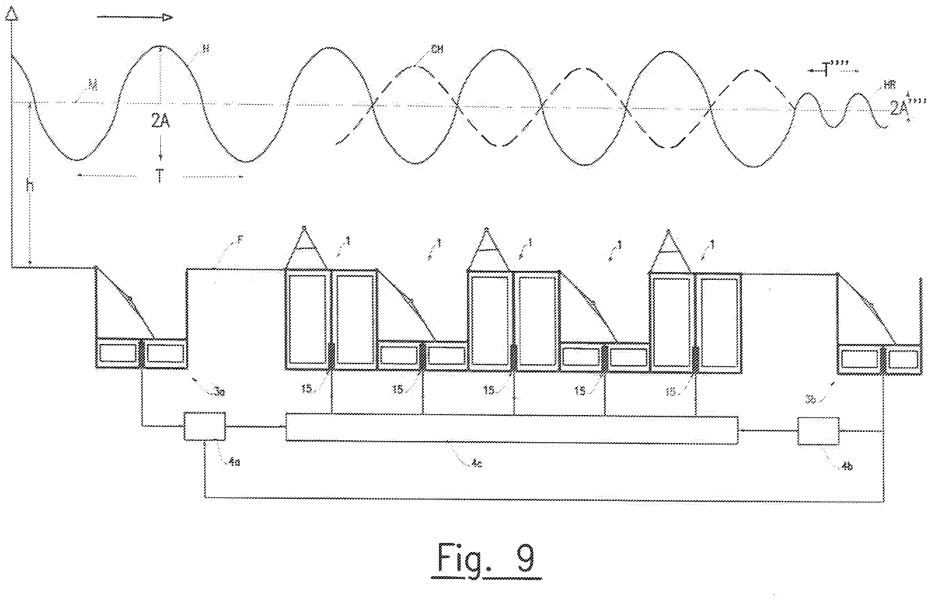

Un filtrage de type Feedforback est une combinaison d'un filtrage Feedforward et d'un filtrage Feedback. Le principe consiste cette fois à analyser la houle avant et après atténuation pour adapter, en temps réel ou pas, le mouvement des plateaux 11 de manière à optimiser davantage l'atténuation. Ce type de contrôle permet de conserver, voire d'améliorer, l'atténuation en mode Feedback, tout en améliorant la stabilité, les phénomènes de réjection étant écartés. L'installation de la figure 9 illustre un contrôle de type Feedforback.

Un premier moyen capteur 3a est disposé en amont des caissons 1 selon le sens de déplacement de la houle H. Ce premier moyen capteur 3a est adapté pour capter la période de référence T et l'amplitude de référence 2A de la houle H avant atténuation.

Un second moyen capteur 3b est disposé en aval des caissons 1 selon le sens de déplacement de la houle H. Ce second moyen capteur 3b est adapté pour capter la période d'erreur T"" et l'amplitude d'erreur 2A"" de la houle résultante HR aprés atténuation.

Un moyen de filtrage Feedforward 4a par anticipation reçoit en entrée les signaux délivrés par le premier moyen capteur 3a et les signaux délivrés par le second moyen capteur 3b.

Un moyen de filtrage 4b par rétroaction Feedback reçoit en entrée les signaux délivrés par le second moyen capteur 3b.

Un circuit de mixage 4c reçoit en entrée les signaux délivrés par le moyen de filtrage Feedforward 4a et par le moyen de filtrage par rétroaction Feedback 4b, et délivre en sortie des signaux pour commander les moyens actionneurs 15. Ces signaux de sortie sont générés en appliquant aux signaux d'entrée un algorithme de filtrage Feedforback classiquement utilisé dans le domaine technique de l'acoustique.

Les moyens de filtrages 4a et 4b et le circuit de mixage 4c se présentent par exemple sous la forme d'un ou plusieurs circuits imprimés intégrant éventuellement un processeur et une mémoire dans laquelle sont enregistrés des programmes dont les instructions, lorsqu'elles sont exécutées par ledit processeur, permettent de commander directement ou indirectement les actionneurs 15, et plus particulièrement une montée et/ou une descente forcée des plateaux 11. La houle résultante HR a une période T""<T et une amplitude 2A""<2A.

Ce filtrage Feedforback permet d'obtenir une meilleur atténuation de la houle qu'avec un filtrage Feedforward ou Feedback : T""<T"<T' et 2A'"'<2A"<2A'.

Dans une mer peu profonde et avec une faible houle, la série de caissons 1 générant la contre-houle CH peut être réduite à un seul caisson. Le fait d'avoir plusieurs caissons adjacents permet toutefois de s'adapter rapidement à différentes longueur d'ondes (période T) et différentes amplitudes 2A de houle H, sans avoir à redimensionner à chaque fois les dimensions du caisson pour s'accorder à ladite houle à traiter.

Quand la houle H passe au-dessus des caissons 1, il existe une atténuation passive liée au système masse-ressort que forment le piston 15 et la poche souple 13.

L'agencement des différents éléments et/ou moyens et/ou étapes de l'invention, dans les modes de réalisation décrits ci-dessus, ne doit pas être compris comme exigeant un tel agencement dans tolites les implémentations. En tout état de cause, on comprendra que diverses modifications peuvent être apportées à ces éléments et/ou moyens et/ou étapes, sans s'écarter de l'esprit et de la portée de l'invention. En particulier :
- La cuve 1 n'a pas nécessairement une forme générale cylindrique ou parallélépipédique. Elle peut par exemple être courbe.
- Plusieurs pistons 15 peuvent être intégrés dans la cuve 10.
- Le piston 15 peut être remplacé par tout autre moyen de récupération d'énergie et/ou actionneur convenant à l'homme du métier.
- Le bras articulé 14 peut être employé seul, en lieu et place de la poche souple 13, pour compenser tout ou partie de la pression statique liée au poids de la colonne d'eau située au droit du plateau 11 en l'absence de houle.
- Le bras articulé 14 peut être employé seul, en lieu et place du piston 15, comme moyen actionneur du plateau 11.
- un caisson 1 dont le plateau oscillant 11 est combiné à deux moyens distincts permettant de compenser tout ou partie du poids de la colonne d'eau située au droit dudit plateau oscillant en l'absence de houle.
- Pour améliorer l'acquisition de la période et l'amplitude de la houle à traiter, les moyens capteurs 3, 3a, 3b peuvent être chacun formés d'une série de caissons 1 dont la longueur correspond à au moins une fois, préférentiellement deux fois la période de ladite houle.
les moyens capteurs 3, 3a, 3b peuvent se présenter sous la forme de capteurs de pression, comme par exemple un hydrophone permettant de mesurer instantanément la hauteur dynamique de la colonne d'eau (ou pression dynamique de la houle).

## Revendications

1. Installation comprenant au moins un caisson (1) positionné à une profondeur donnée dans un milieu marin, ledit caisson présentant une cuve rigide (10) dans laquelle se déplace un plateau oscillant (11), lequel plateau oscillant est adapté pour osciller selon un axe vertical (A) en fonction des fluctuations de la hauteur de la colonne d'eau créée par la houle au droit dudit plateau, ladite cuve et ledit plateau délimitant une chambre (12),
**caractérisée en ce que** la chambre (12) est rendue étanche par une poche souple étanche (13) remplie d'un gaz et qui se déforme en fonction des oscillations du plateau oscillant (11), la pression du gaz dans ladite poche étant réglée pour compenser tout ou partie du poids de la colonne d'eau située au droit dudit plateau en l'absence de houle.

2. Installation selon la revendication 1, dans lequel la poche (13) a la même longueur et largeur - ou diamètre - interne que la cuve (10).

3. Installation selon l'une des revendications précédentes, dans lequel la poche (13) comprend plusieurs compartiments.

4. Installation selon l'une des revendications précédentes, dans laquelle le plateau oscillant (11) est combiné à un bras articulé (14) le guidant dans son mouvement oscillant.

5. Installation selon la revendication 4, dans laquelle le bras articulé (14) intègre un mécanisme à ressort adapté pour compenser une partie du poids de la colonne d'eau située au droit du plateau oscillant (11) en l'absence de houle.

6. Installation selon l'une des revendications précédentes, dans laquelle le plateau oscillant est associé à un moyen de récupération d'énergie (14d, 15) adapté pour récupérer l'énergie mécanique dudit plateau.

7. Installation selon la revendication 6, dans laquelle le moyen de récupération d'énergie (15) est installé au centre de la cuve (10), la poche souple étanche (13) étant conformée autour dudit moyen de récupération.

8. Installation selon l'une des revendications 1 à 5, dans laquelle le caisson (1) est enterré dans le fond marin (F) de sorte que l'extrémité supérieure de la cuve (10) soit au même niveau que ledit fond.

9. Installation selon l'une des revendications 1 à 7, dans laquelle le caisson (1) est posé sur le fond marin (F), les parois latérales extérieures de la cuve (10) présentant un plan incliné (16a, 16b).

10. Installation selon la revendication 1, dans laquelle le plateau oscillant (11) est associé à un moyen actionneur (14, 15) adapté pour contrôler les mouvements dudit plateau de sorte que ce dernier agisse en opposition de phase avec le déplacement de la colonne d'eau qui est induit par la houle et engendre une atténuation active de ladite houle.

11. Installation selon la revendication 10, dans lequel :
- plusieurs caissons (1) adjacents sont disposés en ligne dans le sens de déplacement de la houle (H),
- le plateau oscillant (11) de chacun de ces caissons (10) est associé à un moyen actionneur (15),
- les moyens actionneurs (14, 15) sont synchronisés de sorte que le mouvement des plateaux oscillants (11) engendre une contre-houle (CH) artificielle qui agit en opposition de phase avec la houle (H) pour l'atténuer activement.

12. Installation selon la revendication 11, comportant :
- un moyen capteur (3) disposé en amont des caissons (1) selon le sens de déplacement de la houle (H), lequel moyen capteur est adapté pour capter la période (T) et l'amplitude (2A) de la houle (H) avant atténuation,
- un moyen de filtrage (4) par anticipation/retard recevant en entrée les signaux délivrés par le moyen capteur (3) et délivrant en sortie des signaux pour commander les moyens actionneurs (15).

13. Installation selon la revendication 9, comportant :
- un moyen capteur (3) disposé en aval des caissons (1) selon le sens de déplacement de la houle (H), lequel moyen capteur est adapté pour capter la période (T") et l'amplitude (2A") de ladite houle (HR) après atténuation,
- un moyen de filtrage (4) par rétroaction Feedback recevant en entrée les signaux délivrés par le moyen capteur (3) et délivrant en sortie des signaux pour commander les moyens actionneurs (14, 15).

14. Installation selon la revendication 11, comportant :
- un premier moyen capteur (3a) disposé en amont des caissons (1) selon le sens de déplacement de la houle, lequel premier moyen capteur est adapté pour capter la période de référence (T) et l'amplitude de référence (2A) de la houle (H) avant atténuation,
- un second moyen capteur (3b) disposé en aval des caissons (1) selon le sens de déplacement de la houle, lequel second moyen capteur (3b) est adapté pour capter la période d'erreur (T"') et l'amplitude d'erreur (2A"') de la houle résultante (HR) après atténuation,
- un moyen de filtrage Feedforward (4a) comprenant une entrée reliée au premier moyen capteur (3a) et une autre entrée reliée au second moyen capteur (3b),
- un circuit de mixage (4c) recevant en entrée les signaux délivrés par le moyen de filtrage Feedforward (4a), et délivrant en sortie des signaux pour commander les moyens actionneurs (15).

15. Installation selon la revendication 11, comportant :
- un premier moyen capteur (3a) disposé en amont des caissons (1) selon le sens de déplacement de la houle, lequel premier moyen capteur est adapté pour capter la période de référence (T) et l'amplitude de référence (2A) de la houle (H) avant atténuation,
- un second moyen capteur (3b) disposé en aval des caissons (1) selon le sens de déplacement de la houle, lequel second moyen capteur (3b) est adapté pour capter la période d'erreur (T"') et l'amplitude d'erreur (2A'") de la houle résultante (HR) après atténuation,
- un moyen de filtrage Feedforward (4a) comprenant une entrée reliée au premier moyen capteur (3a) et une autre entrée reliée au second moyen capteur (3b),
- un moyen de filtrage par rétroaction Feedback (4b) comprenant une entrée reliée au second moyen capteur (3b),
- un circuit de mixage (4c) recevant en entrée les signaux délivrés par le moyen de filtrage Feedforward (4a) et par le moyen de filtrage par rétroaction Feedback (4b), et délivrant en sortie des signaux pour commander les moyens actionneurs (15).

## Patentansprüche

1. Anlage, welche wenigstens einen Senkkasten (1) umfasst, der in einer gegebenen Tiefe in einer Meeresumgebung positioniert ist, wobei der Senkkasten eine starre Wanne (10) aufweist, in welcher sich eine schwingende Platte (11) bewegt, wobei die schwingende Platte dafür ausgelegt ist, in Abhängigkeit von den Schwankungen der Höhe der Wassersäule, die von dem Wellengang im Bereich der Platte erzeugt wird, entlang einer vertikalen Achse (A) zu schwingen, wobei die Wanne und die Platte eine Kammer (12) begrenzen,
**dadurch gekennzeichnet, dass** die Kammer (12) durch eine dichte flexible Tasche (13) abgedichtet wird, die mit einem Gas gefüllt ist und die sich in Abhängigkeit von den Schwingungen der schwingenden Platte (11) verformt, wobei der Druck des Gases in der Tasche so geregelt wird, dass er das Gewicht der Wassersäule, die sich bei nicht vorhandenem Wellengang im Bereich der Platte befindet, vollständig oder teilweise kompensiert.

2. Anlage nach Anspruch 1, wobei die Tasche (13) dieselbe innere Länge und Breite - oder denselben inneren Durchmesser - wie die Wanne (10) hat.

3. Anlage nach einem der vorhergehenden Ansprüche, wobei die Tasche (13) mehrere Teilräume umfasst.

4. Anlage nach einem der vorhergehenden Ansprüche, wobei die schwingende Platte (11) mit einem Gelenkarm (14) kombiniert ist, der sie in ihrer schwingenden Bewegung führt.

5. Anlage nach Anspruch 4, wobei in den Gelenkarm (14) ein Federmechanismus integriert ist, der dafür ausgelegt ist, einen Teil des Gewichts der Wassersäule, die sich bei nicht vorhandenem Wellengang im Bereich der schwingenden Platte (11) befindet, zu kompensieren.

6. Anlage nach einem der vorhergehenden Ansprüche, wobei die schwingende Platte mit einem Mittel zur Rückgewinnung von Energie (14d, 15) verbunden ist, das dafür ausgelegt ist, die mechanische Energie der Platte zurückzugewinnen.

7. Anlage nach Anspruch 6, wobei das Mittel zur Rückgewinnung von Energie (15) in der Mitte der Wanne (10) eingebaut ist, wobei die dichte flexible Tasche (13) um das Rückgewinnungsmittel herum ausgebildet ist.

8. Anlage nach einem der Ansprüche 1 bis 5, wobei der Senkkasten (1) derart in den Meeresboden (F) eingegraben ist, dass sich das obere Ende der Wanne (10) auf derselben Höhe wie der Meeresboden befindet.

9. Anlage nach einem der Ansprüche 1 bis 7, wobei der Senkkasten (1) auf den Meeresboden (F) aufgesetzt ist, wobei die äußeren Seitenwände der Wanne (10) eine geneigte Ebene (16a, 16b) aufweisen.

10. Anlage nach Anspruch 1, wobei die schwingende Platte (11) mit einem Betätigungsmittel (14, 15) verbunden ist, das dafür ausgelegt ist, die Bewegungen der Platte derart zu steuern, dass diese Letztere in Gegenphase mit der Bewegung der Wassersäule wirkt, welche durch den Wellengang hervorgerufen wird, und eine aktive Dämpfung des Wellengangs erzeugt.

11. Anlage nach Anspruch 10, wobei:
- mehrere benachbarte Senkkästen (1) in der Bewegungsrichtung des Wellengangs (H) in einer Reihe angeordnet sind,
- die schwingende Platte (11) jedes dieser Senkkästen (10) mit einem Betätigungsmittel (15) verbunden ist,
- die Betätigungsmittel (14, 15) derart synchronisiert sind, dass die Bewegung der schwingenden Platten (11) eine künstliche Gegenwellenbewegung (CH) erzeugen, welche in Gegenphase zu dem Wellengang (H) wirkt, um ihn aktiv zu dämpfen.

12. Anlage nach Anspruch 11, welche aufweist:
- ein Sensormittel (3), welches in der Bewegungsrichtung des Wellengangs (H) den Senkkästen (1) vorgelagert angeordnet ist, wobei dieses Sensormittel dafür ausgelegt ist, die Periode (T) und die Amplitude (2A) des Wellengangs (H) vor der Dämpfung zu erfassen,
- ein Mittel zur voreilenden/nacheilenden Filterung (4), welches am Eingang die von dem Sensormittel (3) gelieferten Signale empfängt und am Ausgang Signale zum Steuern der Betätigungsmittel (15) liefert.

13. Anlage nach Anspruch 9, welche aufweist:
- ein Sensormittel (3), welches in der Bewegungsrichtung des Wellengangs (H) den Senkkästen (1) nachgelagert angeordnet ist, wobei dieses Sensormittel dafür ausgelegt ist, die Periode (T") und die Amplitude (2A") des Wellengangs (HR) nach der Dämpfung zu erfassen,
- ein Mittel zur Feedback-Filterung (4), welches am Eingang die von dem Sensormittel (3) gelieferten Signale empfängt und am Ausgang Signale zum Steuern der Betätigungsmittel (14, 15) liefert.

14. Anlage nach Anspruch 11, welche aufweist:
- ein erstes Sensormittel (3a), welches in der Bewegungsrichtung des Wellengangs den Senkkästen (1) vorgelagert angeordnet ist, wobei dieses erste Sensormittel dafür ausgelegt ist, die Referenzperiode (T) und die Referenzamplitude (2A) des Wellengangs (H) vor der Dämpfung zu erfassen,
- ein zweites Sensormittel (3b), welches in der Bewegungsrichtung des Wellengangs den Senkkästen (1) nachgelagert angeordnet ist, wobei dieses zweite Sensormittel (3b) dafür ausgelegt ist, die Fehlerperiode (T"') und die Fehleramplitude (2A"') des resultierenden Wellengangs (HR) nach der Dämpfung zu erfassen,
- ein Mittel zur Feedforward-Filterung (4a), das einen Eingang, der mit dem ersten Sensormittel (3a) verbunden ist, und einen weiteren Eingang, der mit dem zweiten Sensormittel (3b) verbunden ist, umfasst,
- eine Mischschaltung (4c), welche am Eingang die von dem Mittel zur Feedforward-Filterung (4a) gelieferten Signale empfängt und am Ausgang Signale zum Steuern der Betätigungsmittel (15) liefert.

15. Anlage nach Anspruch 11, welche aufweist:
- ein erstes Sensormittel (3a), welches in der Bewegungsrichtung des Wellengangs den Senkkästen (1) vorgelagert angeordnet ist, wobei dieses erste Sensormittel dafür ausgelegt ist, die Referenzperiode (T) und die Referenzamplitude (2A) des Wellengangs (H) vor der Dämpfung zu erfassen,
- ein zweites Sensormittel (3b), welches in der Bewegungsrichtung des Wellengangs den Senkkästen (1) nachgelagert angeordnet ist, wobei dieses zweite Sensormittel (3b) dafür ausgelegt ist, die Fehlerperiode (T"') und die Fehleramplitude (2A"') des resultierenden Wellengangs (HR) nach der Dämpfung zu erfassen,
- ein Mittel zur Feedforward-Filterung (4a), das einen Eingang, der mit dem ersten Sensormittel (3a) verbunden ist, und einen weiteren Eingang, der mit dem zweiten Sensormittel (3b) verbunden ist, umfasst,
- ein Mittel zur Feedback-Filterung (4b), welches einen Eingang umfasst, der mit dem zweiten Sensormittel (3b) verbunden ist,
- eine Mischschaltung (4c), welche am Eingang die von dem Mittel zur Feedforward-Filterung (4a) und von dem Mittel zur Feedback-Filterung (4b) gelieferten Signale empfängt und am Ausgang Signale zum Steuern der Betätigungsmittel (15) liefert.

## Claims

1. Installation comprising at least one caisson (1) positioned at a given depth in a marine environment, said caisson having a rigid tank (10) in which an oscillating plate (11) moves, which oscillating plate is adapted to oscillate on a vertical axis (A) as a function of the fluctuations of the height of the column of water created by the swell in line with said plate, said tank and said plate delimiting a chamber (12),
**characterized in that** the chamber (12) is rendered seal-tight by a sealed flexible pocket (13) filled with a gas and which is deformed as a function of the oscillations of the oscillating plate (11), the pressure of the gas in said pocket being set to compensate all or part of the weight of the column of water situated in line with said plate in the absence of swell.

2. Installation according to Claim 1, in which the pocket (13) has the same internal length and width - or diameter - as the tank (10).

3. Installation according to one of the preceding claims, in which the pocket (13) comprises several compartments.

4. Installation according to one of the preceding claims, in which the oscillating plate (11) is combined with an articulated arm (14) guiding it in its oscillating movement.

5. Installation according to Claim 4, in which the articulated arm (14) incorporates a spring mechanism adapted to compensate a part of the weight of the column of water situated in line with the oscillating plate (11) in the absence of swell.

6. Installation according to one of the preceding claims, in which the oscillating plate is associated with an energy harvesting means (14d, 15) adapted to harvest the mechanical energy of said plate.

7. Installation according to Claim 6, in which the energy harvesting means (15) is installed at the centre of the tank (10), the sealed flexible pocket (13) being conformed around said harvesting means.

8. Installation according to one of Claims 1 to 5, in which the caisson (1) is buried in the seabed (F) such that the top end of the tank (10) is at the same level as said bed.

9. Installation according to one of Claims 1 to 7, in which the caisson (1) is placed on the seabed (F), the outer lateral walls of the tank (10) having an inclined plane (16a, 16b).

10. Installation according to Claim 1, in which the oscillating plate (11) is associated with an actuator means (14, 15) adapted to control the movements of said plate such that the latter acts in phase opposition with the displacement of the column of water which is induced by the swell and generates an active attenuation of said swell.

11. Installation according to Claim 10, in which:
- several adjacent caissons (1) are arranged in line in the direction of displacement of the swell (H),
- the oscillating plate (11) of each of these caissons (10) is associated with an actuator means (15),
- the actuator means (14, 15) are synchronized such that the movement of the oscillating plates (11) generates an artificial counter-swell (CH) which acts in phase opposition with the swell (H) to actively attenuate it.

12. Installation according to Claim 11, comprising:
- a sensor means (3) arranged upstream of the caissons (1) in the direction of displacement of the swell (H), which sensor means is adapted to sense the period (T) and the amplitude (2A) of the swell (H) before attenuation,
- an advance/delay-based filtering means (4) receiving as input the signals delivered by the sensor means (3) and delivering as output signals to control the actuator means (15).

13. Installation according to Claim 9, comprising:
- a sensor means (3) arranged downstream of the caissons (1) in the direction of displacement of the swell (H), which sensor means is adapted to sense the period (T") and the amplitude (2A") of said swell (HR) after attenuation,
- a Feedback-based filtering means (4) receiving as input the signals delivered by the sensor means (3) and delivering as output signals to control the actuator means (14, 15).

14. Installation according to Claim 11, comprising:
- a first sensor means (3a) arranged upstream of the caissons (1) in the direction of displacement of the swell, which first sensor means is adapted to sense the reference period (T) and the reference amplitude (2A) of the swell (H) before attenuation,
- a second sensor means (3b) arranged downstream of the caissons (1) in the direction of displacement of the swell, which second sensor means (3b) is adapted to sense the error period (T"') and the error amplitude (2A"') of the resulting swell (HR) after attenuation,
- a Feedforward filtering means (4a) comprising an input linked to the first sensor means (3a) and another input linked to the second sensor means (3b),
- a mixing circuit (4c) receiving as input the signals delivered by the Feedforward filtering means (4a), and delivering as output signals to control the actuator means (15).

15. Installation according to Claim 11, comprising:
- a first sensor means (3a) arranged upstream of the caissons (1) in the direction of displacement of the swell, which first sensor means is adapted to sense the reference period (T) and the reference amplitude (2A) of the swell (H) before attenuation,
- a second sensor means (3b) arranged downstream of the caissons (1) in the direction of displacement of the swell, which second sensor (3b) is adapted to sense the error period (T"') and the error amplitude (2A"') of the resulting swell (HR) after attenuation,
- a Feedforward filtering means (4a) comprising an input linked to the first sensor means (3a) and another input linked to the second sensor means (3b),
- a Feedback filtering means (4b) comprising an input linked to the second sensor means (3b),
- a mixing circuit (4c) receiving as input the signals delivered by the Feedforward filtering means (4a) and by the Feedback filtering means (4b), and delivering as output signals to control the actuator means (15).
